# EUROPÄISCHE PATENTSCHRIFT

(11) **EP 0 859 693 B1**
(45) Veröffentlichungstag und Bekanntmachung des Hinweises auf die Patenterteilung: **26.04.2000**
(21) Anmeldenummer: 96939006.1
(22) Anmeldetag: 11.11.1996
(51) Int. Cl.: B29B 17/00, B29B 17/02, B02C 18/08, B02C 13/14

(54) **VERFAHREN UND VORRICHTUNG ZUM VERARBEITEN VON BAUTEILEN AUS MISCHKUNSTSTOFFEN UND DAMIT VERMISCHTEN ANDEREN BAUSTOFFEN SOWIE DEREN ANWENDUNG**
PROCESS AND DEVICE FOR THE PROCESSING OF BUILDING COMPONENTS FROM MIXED PLASTICS MATERIALS AND OTHER BUILDING MATERIALS MIXED THEREWITH AND THE USE THEREOF
PROCEDE ET DISPOSITIF PERMETTANT DE TRAITER DES ELEMENTS DE CONSTRUCTION EN MATIERES PLASTIQUES MIXTES ET DES MATERIAUX DE CONSTRUCTION MELANGES AVEC CEUX-CI, ET LEUR UTILISATION

(30) Priorität: 11.11.1995 DE 19542128; 22.11.1995 DE 19549326; 27.11.1995 DE 19549327; 09.01.1996 DE 19600482; 24.06.1996 DE 19625105
(43) Veröffentlichungstag der Anmeldung: 26.08.1998
(73) Patentinhaber: Schäfer Elektrotechnik - Sondermaschinen, 67308 Rüssingen (DE)
(72) Erfinder: SCHÄFER, Ralf, D-67308 Rüssingen (DE)
(74) Vertreter: Fischer, Wolf-Dieter, Dipl.-Ing.
(86) Internationale Anmeldenummer: EP9604927
(87) Internationale Veröffentlichungsnummer: WO9718071

(56) Entgegenhaltungen:
- EP-A- 0 635 308
- EP-A- 0 720 897
- DE-A- 2 432 345
- DE-A- 2 432 861
- DE-A- 2 518 556
- DE-A- 2 545 426
- DE-A- 2 547 440
- DE-A- 3 142 983
- DE-A- 3 544 979
- DE-A- 3 601 175
- DE-A- 4 440 769
- DE-U- 9 409 906
- FR-A- 2 680 887
- US-A- 3 685 748
- US-A- 3 749 322
- US-A- 3 897 011
- US-A- 4 015 781
- US-A- 5 110 055
- US-A- 5 186 400
- US-A- 5 236 133
- PATENT ABSTRACTS OF JAPAN vol. 010, no. 234 (M-507), 14.August 1986 & JP 61 068207 A (MASARU SATO), 8.April 1986,
- AUTOMOTIVE ENGINEERING, Bd. 103, Nr. 8, 1.August 1995, Seiten 49-51, XP000518070 JOST K: "AMERICAN PLASTICS COUNCIL TECHNOLOGY UPDATE"
- PATENT ABSTRACTS OF JAPAN vol. 11, no. 250 (M-616), 14.August 1987 & JP 62 059010 A (TOKIWA SANGYO KK), 14.März 1987,
- KUNSTSTOFFE, Bd. 85, Nr. 3, 1.März 1995, Seiten 330-332, 334/335, XP000488302 GRASER K ET AL: "REZYKLATE IM FAHRZEUGBAU RECYCLATES IN AUTOMOBILE CONSTRUCTION"
- KUNSTSTOFFBERATER, Bd. 38, Nr. 10, 1.Oktober 1993, Seite 8/9 XP000413616 TOPFER K: "PVC-FENSTER: ECHTER KREISLAUF BEI DER WIEDERVERWENDUNG"

## Beschreibung

Die Erfindung betrifft ein Verfahren gemäß dem Oberbegriff des Anspruchs 1 und eine Vorrichtung gemäß dem Oberbegriff des Anspruchs 10 zum Verarbeiten von Bauteilen aus Mischkunststoffen und damit vermischten anderen Baustoffen, wie Metallteilen, Glas, Gummi, Holz oder Faserstoffen, wobei die Bauteile durch eine Prallbeanspruchung zerkleinert und die Kunststoff-, Metall-, Glas- und Gummiteile voneinander getrennt werden.

Ein solches Verfahren ist bekannt (EP-A-635308), bei dem die Stoffe durch Prallbeanspruchung zerkleinert werden. Anschließend erfolgt eine Trennung nach einem der herkömmlichen Verfahren, wie beispielsweise einem Klassierverfahren, einer Magnetabscheidung, einer Siebung oder dergleichen. Die Zerkleinerung erfolgt in einer Prallmühle oder einer Hammermühle.

Bei einer solchen Prallmühle oder einer Hammermühle ist es unerläßlich, daß die Prall- oder Hammermühle entsprechend der Korngröße des zu zerkleinernden Materials eingerichtet wird. Es ist nicht möglich, eine beliebige Korngröße mit einer entsprechend großen Korngrößenstreuung problemlos in eine Prall- oder Hammermühle einzugeben. Deshalb besteht die Gefahr, daß die Mühle zum Stillstand kommt, wenn zu große Teile in die Mühle hineingegeben werden. Durch zu langes Einwirken der Prall- bzw. Hammerelemente besteht die Gefahr, daß sich das Material erhitzt und plastifiziert, wobei dann nicht mehr eingegriffen werden kann, d.h. die Mühlen kommen zum Stillstand oder das Material beginnt zu brennen.

Der Erfindung liegt die Aufgabe zu Grunde, ein Verfahren der eingangs genannten Art dahingehend zu verbessern, daß eine wirtschaftliche Wiederverwertung und Wiederverarbeitung der unterschiedlichsten Abfallprodukte, wie beispielsweise Schredderleichtfraktion, Mischkunststoffe, Elektronikschrott, Holzverbundstoffe, Fensterprofile aus PVC oder Holz mit Gummidichtungen und Metallbeschlägen und dergleichen unter Verwendung eines mechanisch, an die verschiedensten Materialien anpaßbaren Agglomerators ermöglicht wird.

Diese Aufgabe wird nach der Erfindung dadurch gelöst, daß die Verarbeitung der Kunststoffe zu Granulat oder als Masse im plastischen Zustand in einem Agglomerator durchgeführt wird, wobei die verschiedenen Materialien vor dem Agglomerieren auf einer Wiegeeinrichtung zusammengestellt und im Agglomerator gemischt werden und daß der Agglomerator über ein PC-Programm gesteuert wird, wobei die Parameter, wie Motorstrom, Temperatur und Dampffeuchte, reproduzierbar erfaßt werden.

Es ist vorteilhaft, daß der Agglomerationscharge kurz vor oder während der Plastifizierung weitere Stoffe, z. B. Kohlestaub, zugesetzt werden.

Es ist weiterhin vorteilhaft, daß das plastifizierte Material durch einen Schnecken- oder Kolbentransport in Formen eingebracht oder verpreßt wird oder über einen Kalander zu Folien verarbeitet wird.

Es ist weiterhin vorteilhaft, daß dem plastifizierten Material Schockwasser zugeführt und die erstarrte Masse im Agglomerator zu Granulat zerkleinert wird.

Es wird weiterhin vorgeschlagen, daß das Schockwasser auf die Mitte des Rotors des Agglomerators zugeführt wird.

Ein vorteilhafter Verfahrensschritt sieht vor, daß das Granulat abgesiebt und die Feinfraktion mit einem starken Magneten separiert wird.

Es ist außerdem vorteilhaft, daß die im Agglomerator zerkleinerten Bauteile in die Einzelkomponenten durch Windsichtung, Plansichtung, Wirbelstromabscheider und dgl. separiert werden.

Es ist vorteilhaft, daß die im Altpapier enthaltenen Spuckstoffe, im wesentlichen bestehend aus folienartigen Kunststoffen, textilen Bestandteilen und Metallen bei der Altpapierverwertung agglomeriert, plastifiziert und separiert werden.

Ein weiterer Verfahrensschritt sieht vor, daß das Material vor der Verarbeitung im Agglomerator vorentwässert wird.

Eine Vorrichtung nach dem Oberbegriff des Anspruchs 10 ist bekannt (DE-A-3544979), die eine Granuliervorrichtung mit einem balkenförmigen Scherrotor aufweist, der mit feststehenden Schermessern zusammenarbeitet. Diese Vorrichtung ist nicht geeignet, Materialien mit unterschiedlichen, stark schwankenden Korngrößen oder Materialien mit Fremdstoffanteil zu verarbeiten. Dies resultiert auch daraus, daß zwischen dem Scherrotor und den Schermessern Maschinenwerkzeugspalten existieren, die ein Verkanten bzw. Blockieren der Maschine zur Folge haben, sobald Großteile oder Fremdkörper in die Maschine eingebracht werden.

Die Vorrichtung gemäß der Erfindung besteht darin, daß zum Steuern der Anlage beim Verarbeiten der verschiedensten Materialien die Prozeßparameter, wie Temperatur, Dampffeuchte und Motorstrom, erfaßbar und reproduzierbar sind, wobei das Chargengewicht in einer Wiegeeinrichtung ermittelbar und als weiterer Prozeßparameter berücksichtigt ist und daß das Rotormesser an der Rotoraufnahme höhenverstellbar, z.B. zwischen auswechselbaren Distanzringen, angeordnet ist.

Weiter ist es vorteilhaft, daß der Antriebsmotor waagerecht angeordnet ist und ein hohes Kippmoment, etwa 2,8- bis 3-fach, aufweist, auf dem das Rotormesser an einer Rotoraufnahme verdrehsicher befestigt ist.

Es wird weiterhin vorgeschlagen, daß im Abstand zum Rotormesser weitere Rotormesser an der Rotoraufnahme angeordnet sind.

Es ist vorteilhaft, daß das Rotormesser in Rotoraußenmesser, Rotorinnenmesser und Rotorverschleißschutzteile unterteilt ist.

Es ist vorteilhaft, daß der Rotor an beiden Seiten mit Messern versehen ist und nach beiden Seiten drehbar ist.

Vorteilhaft geht man so vor, daß das Rotormesser eine stumpfe Prallfläche aufweist.

Es ist weiterhin vorteilhaft, daß die Prallfläche einen Anstellwinkel zur Drehrichtung aufweist.

Es wird weiterhin vorgeschlagen, daß der Innenraum mit Verschleißblechen versehen ist, die doppelt verwendbar sind durch eine 180° Drehung der Einbaulage.

Es ist weiterhin vorteilhaft, daß in den Innenraum des Innenraummantels ein Schockwasserzuführrohr mündet, das gegen die Mitte des Rotormessers gerichtet ist.

Eine weitere vorteilhafte Ausführungsform besteht darin, daß als Antriebsmotor ein Dieselmotor vorgesehen ist.

Es ist weiterhin vorteilhaft, daß die Verlustwärme des Motors über Wärmetauscher zur Vortrocknung des Materials nutzbar ist.

Vorteilhaft geht man so vor, daß die Grundplatte an einem Innenring gehaltert im Abstand zum Rotor höhenverstellbar ist.

Es wird weiterhin vorgeschlagen, daß der Abstand der Eckpunkte an der Außenkante des Rotoraußenmessers zum zylindrischen Innenraummantel gleich ist.

Ein derartiges Verfahren und eine derartige Vorrichtung werden zum Recycling von Schredderleichtfraktion, bestehend aus verschrotteten Kraftfahrzeugen mit Kunststoff-, Metall-, Textil- und Gummibestandteilen verwendet.

Weiterhin werden ein derartiges Verfahren und eine derartige Vorrichtung zum Recycling von Elektronikschrott, bestehend aus thermoplastischen und duroplastischen Kunststoffen, sowie Zinn, Kupfer und weiterer Bestandteile verwendet.

Weiterhin werden ein derartiges Verfahren und eine Vorrichtung zum Verarbeiten von Mischkunststoffen oder Folien verwendet.

Weiterhin werden ein derartiges Verfahren und eine derartige Vorrichtung zum Recycling von Fensterprofilen aus PVC oder Holz mit Gummidichtungen und Metallbeschlägen verwendet.

Schließlich werden ein derartiges Verfahren und eine derartige Vorrichtung zum Recycling von Holzverbundstoffen, z. B. Spanplatten mit Kunststoffbeschichtung verwendet.

Vorteilhaft kann das Output-Material wie folgt getrennt werden:
1. Zellulose Stoffe für die Papierherstellung
2. Kunststoffagglomerat für die energetische Verwertung oder zur Herstellung von Formteilen
3. Metalle, welche der Altmetallverwertung zugeführt werden können.

Eine weitere Variante wäre, das Gesamtmaterial, also die Spuckstoffe, als pastöse Masse aus der Maschine auszuwerfen und dann direkt einem chemischen Prozeß zuzuführen oder Formteile herzustellen.

Eine weitere Anwendungsmöglichkeit ist die Aufarbeitung von Klärschlämmen, entweder vorgetrocknet oder nicht vorgetrocknet. Die Klärschlämme können ggfs. mit Shredderleichtfraktion oder Kunststoffen allgemein vermischt werden oder für sich allein verarbeitet werden, je nach Kunststoffgehalt der Klärschlämme. Die Klärschlämme können nach der Verarbeitung materialmäßig getrennt werden, wie auch die Spuckstoffe oder die Shredderleichtfraktion und dann entsprechenden Weiterverwertungen zugeführt werden.

Vorteilhaft lassen sich auch Teppichbodenabfälle verarbeiten. Die Teppichböden werden ggfs. vorzerkleinert auf Größen von ca. DIN A 3 oder kleiner und dann in die Maschine eingefahren. Dort können sie zu Agglomerat verarbeitet werden, wobei sich bei dem Prozeß, wie bei allen Verarbeitungsmaterialien, die Metalle und Steine, etc. von den Kunststoffen trennen und lose in der Output-Schüttung vorhanden sind, wo sie dann durch bekannte Separationstechniken entfernt werden können, oder das Teppichbodenmaterial wird als pastöse Masse, in verschiedenen Viskositäten möglich, ausgeworfen und dann weiteren Verwertungen, wie z.B. Verpressung zu Formteilen, Schneckenförderung in Formteile oder chemischen Verwertungstechniken zugeführt.

Durch die Maschinensteuerung bzw. deren Meßdatenerfassung als auch deren Mechanik können PVC-Abfälle oder ähnlich temperaturkritische Materalien zu den vorstehend genannten Auswurfproduktvarianten verarbeitet werden.

Vorteilhaft läßt sich als Antriebsmotor ein Dieselmotor vorsehen, woraus sich die Vorteile ergeben, daß bei einer Betriebsmöglichkeit, unabhängig von der kundenseitigen Stromnetzsituation, zu einer günstigeren Energieumsetzung führt, da die Generatorverluste und elektrischen Leitungslängenverluste wegfallen und eine Nutzung der Verlustwärmeenergie des Motors vorteilhaft über Wärmetauscher zur Vortrocknung des Inputmaterials genutzt werden kann.

Eine weitere vorteilhafte Ausführungsform sieht vor, daß die Grundplatte an einem Innenring gehaltert im Abstand zum Rotor höhenverstellbar ist.

Weiterhin ist es vorteilhaft, daß der Abstand der Eckpunkte an der Außenkante des Rotoraußenmessers zum zylindrischen Innenraummantel gleich ist.

Daraus ergibt sich der Vorteil, daß die Charge besser auf das Verfahren und das Material eingestellt werden kann und weiterhin beim Auswurf des Materials sich die Maschine besser entleeren läßt. Weiterhin lassen sich auch die Messerstandzeiten verlängern und dadurch die Verschleißkosten senken.

Die Erfindung wird in der nachfolgenden Beschreibung anhand eines in den Zeichnungen dargestellten Ausführungsbeispiels näher erläutert.

Es zeigen,
- Fig. 1: eine Ausführungsform der erfindungsgemäßen Vorrichtung im Aufriß, teilweise geschnitten,
- Fig. 2: eine vergrößerte Ansicht der Rotoraufnahme mit einem befestigten Rotor,
- Fig. 3: eine Draufsicht auf die eine Hälfte des Rotormessers,
- Fig. 4: einen Schnitt nach der Linie A-B in Fig.3,
- Fig. 5: eine Grafik-Darstellung der verschiedenen für die PC-Programmsteuerung wesentlichen Parameter für ein Material mit höherer Gesamtfeuchte und
- Fig.: 6 eine entsprechende Darstellung für ein Material mit geringerer Gesamtfeuchte.
- Fig. 7: eine vergrößerte Ansicht der Rotoraufnahme mit einem befestigten Rotor,
- Fig. 8: eine Draufsicht auf einen Teil des Rotormessers,
- Fig. 9: den Verschleißmantel des zylindrischen Innenraummantels in der Draufsicht,
- Fig. 10: ein Verschleißblechsegment des zylindrischen Innenraummantels in der Seitenansicht zusammen mit einem Bodenverschleißsegment und
- Fig. 11: eine Draufsicht auf die Agglomeratorgrundplatte.

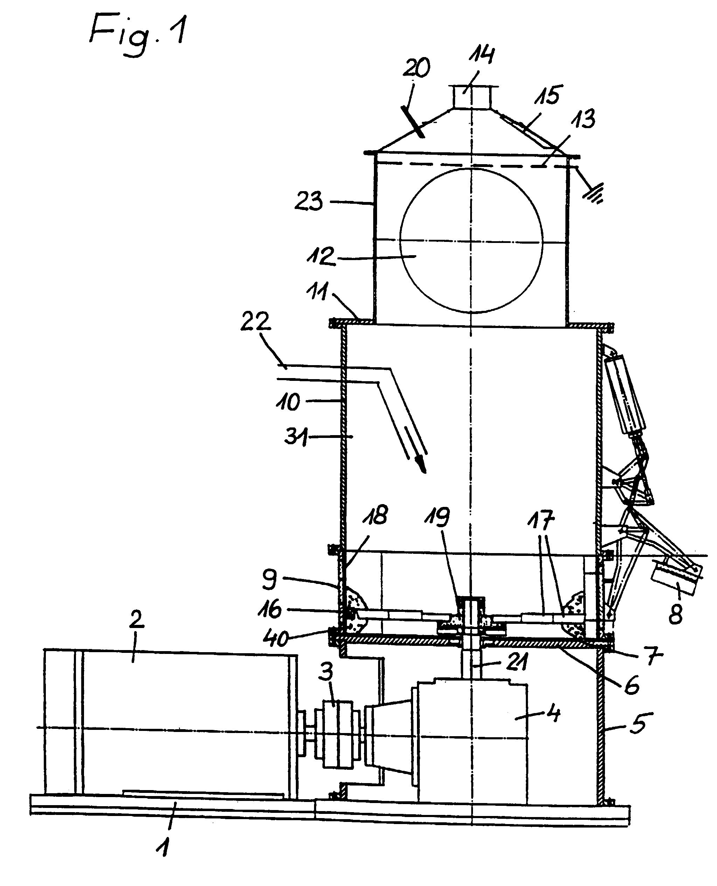

Die in Fig. 1 dargestellte Vorrichtung zeigt eine Anordnung des Antriebsmotors 2 horizontal auf dem Maschinenbett mit der Grundplatte 1. Der Vorteil liegt darin, daß die Lager des Motors in ihrer günstigsten Einbaulage arbeiten. Der Antriebsmotor 2 hat eine Spezialwicklung, die bewirkt, daß ein 2,8- bis 3-faches Kippmoment erzeugt wird. Dies ist Voraussetzung dafür, daß zum Zeitpunkt der Plastifikation genügend Drehmoment zur Verfügung steht. Dieser Effekt ist auch zum Zeitpunkt der Befüllungsphase sehr von Vorteil. Der Motor ist thermisch überwacht und seine abgegebene Leistung wird innerhalb einer Charge im PC-Programm gespeichert, so daß jederzeit der Auslastungsgrad in Prozent angezeigt werden kann. Man kann nun durch die gewichtsmäßige Chargenbildung durch Verändern der Chargengewichte den Motor an seinem Leistungsmaximum betreiben. Da auch die aktuelle Motortemperatur angezeigt wird, kann man bei entsprechender Kühlsituation des Motors 2 auch eine Auslastung von über 100 % erreichen, ohne den Motor zu gefährden. Das vom Motor über eine Kupplung 3 angetriebene Winkelgetriebe 4 setzt die Drehzahl herab und somit in gleichem Verhältnis das Drehmoment nach oben. Die Antriebswelle 21 des Getriebes 4 hat einen großen Lagerabstand, so daß auftretende Querkräfte sehr gut abgefangen werden können. Das Getriebe 4 ist mit einer Ölkühler-Wechselfiltereinheit gekoppelt, durch die das Getriebeöl gepumpt wird. Es wird dort gefiltert und die Verlustwärme wird über einen Wärmetauscher abgeführt.

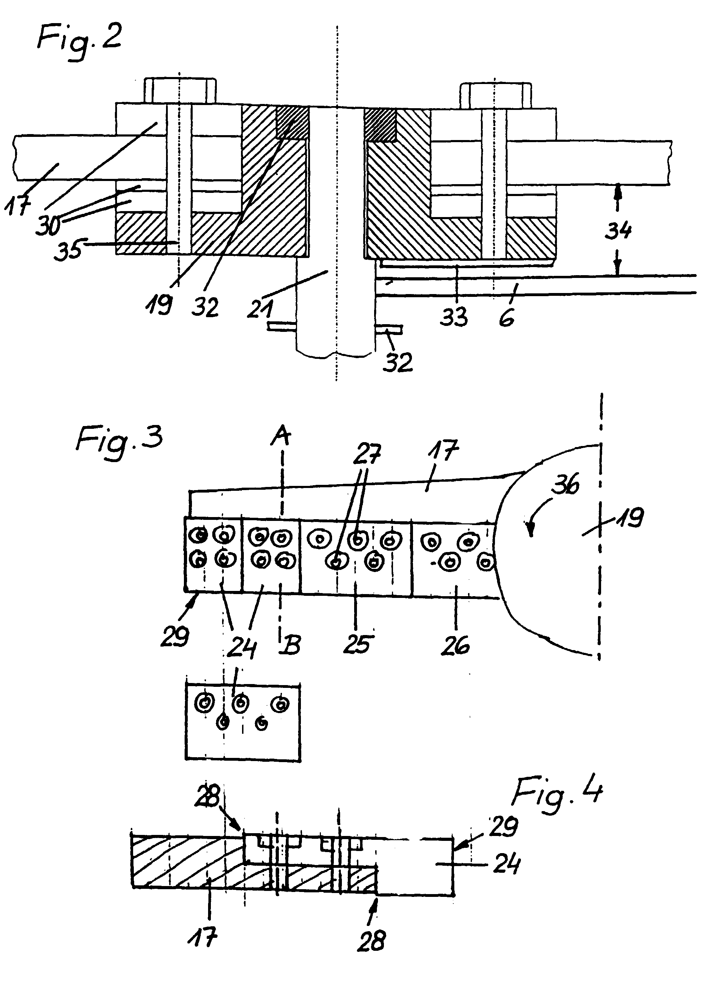

Die Antriebswelle 21 des Getriebes 4 ist mit einem Vielkeilprofil versehen, welches die Rotoraufnahme 19 trägt. Die Rotoraufnahme 19 ist lösbar fest mit der Getriebewelle 21 verbunden und hat an ihrer Unterseite sternförmig angeordnete Erhebungen bzw. Rippen 33, welche durch die Rotation jegliche Materialien von der Getriebewelle 21 und deren Abdichtung fern hält. Die Rotoraufnahme 19 ist so ausgebildet, daß man durch Versetzen von Distanzringen 30 (Fig. 2) die Rotorhöhe zum Agglomeratorboden bzw. die Grundplatte 6 in z.B. 5 mm-Schritten verändern kann. Die Distanzringe 30 und der Rotor werden mittels Schrauben auf die Rotoraufnahme 19 gepreßt. Die Befestigung kann auch durch einen Klemmring 32 erfolgen (Fig. 2). Bei einer evtl. lastseitigen Blockade des Rotors 17 ist somit ein geringfügiges Verdrehen des Rotors gegenüber der Rotoraufnahme möglich. Diese Einrichtung bildet zusammen mit der Kupplung 3 zwischen dem Motor 2 und dem Getriebe 4 einen lastseitigen Überlastschutz.

Der Rotor 17 ist aus verschleißfestem Stahl gefestigt, und besitzt an seinen Enden jeweils zwei Rotoraußenmesser 24 und Rotorinnenmesser 25 (Fig. 3), an die sich zur Rotoraufnahme 19 hin noch ein Rotorverschleißschutzteil 26 anschließt. Die Befestigung erfolgt mit Hilfe von versenkten Befestigungsschrauben 27. Die vordere, stumpfe Fläche der Messer 24, 25 ist die Prallfläche 29, wobei eine Drehrichtung 36 gegeben ist. Die Messer 24, 25 und das Teil 26 besitzen gegenüber dem Rotor 17 einen Überstand 28, so daß der Rotor entsprechend geschont wird. Das Rotoraußenmesser 24 kann entweder zweiteilig oder einstückig ausgebildet sein. Die Messer 24 und 25 bestehen aus einem Spezialstahl, wobei eine Stanzzeit von durchschnittlich 400 Tonnen verschmutzter DSD-Mischfraktion erreicht wird. Die Rotorinnenmesser 25 sind zur Drehrichtung hin mit verschiedenen Anstellwinkeln gefertigt, wobei die Anstellwinkel entweder ein Unter- oder Überströmen des Rotors 17 durch das Material bewirken.

Der Rotor 17 kann auch beidseitig mit Messern 24, 25 und dem Teil 26 bestückt werden, wobei nach Verschleiß der auf einer Seite befindlichen Teile 24 bis 26 durch Ändern der Drehrichtung die anderen Messer beansprucht werden, so daß der Wechselzyklus sich zeitlich verdoppelt.

Durch Einstellen der Rotorhöhe 34, d.h. des Abstandes des Rotors 17 von der Grundplatte 6 ergibt sich ein großer Einfluß auf das Verfahren des Agglomerators. Es ist somit ein Einstellen auf das zu verarbeitende Material möglich und ein materialspezifisches Optimum läßt sich erreichen. Das Befestigen des Rotors 17 erfolgt hierbei unter Verwendung der Distanzringe 34 mit den Senkschrauben 35. Weiterhin kann unterhalb der Grundplatte 6 an der Antriebswelle 21 ein Schleuderring 32 befestigt sein, der die Aufgabe hat, evtl. durch die Wellendichtung nach unten dringende Nässe oder Staub nach außen zu schleudern, um die darunter liegende Getriebeabdichtung zu schützen.

Beschickt man den Agglomerator mit Materialien, deren Schüttgewicht relativ hoch ist und/oder deren Plastifikationseigenschaften gering sind, so besteht die Möglichkeit, einen zweiten oder weitere Rotoren einzubringen, der bzw. die einen höheren Materialprall- und Reibungsprozeß in die Chargenfüllung bringen. Die Notwendigkeit der Prall- und Reibflächenerhöhung erkennt man daraus, daß die Antriebsleistungsnutzung der Maschine gering ist. Man kann durch diese Maßnahme die Maschine leistungsoptimieren und bestmögliche Ergebnisse für das eingebrachte Material erzielen.

Die auf dem Rotor 17 befindlichen Messer sind je Rotorhälfte in zwei oder mehrere Abschnitte unterteilt, wie dies in Figur 3 dargestellt ist. Der Hauptverschleiß tritt an den äußeren Messern auf, wobei die verschlissenen äußeren Messer 24 in eine weiter innen liegende Position umgebaut werden können und dort weiter nutzbar sind.

Die erfindungsgemäße Vorrichtung weist im übrigen einen auf der Grundplatte 6 aufgebauten unteren zylindrischen Innenraummantel 9 und weiterhin einen zylindrischen Innenmantel 10 auf, auf dem ein Innenraumring 11 angeordnet ist. Dieser Ring 11 verringert den Querschnitt und es ist darauf ein Beschickungsteil 23 angeordnet. Die Grundplatte 7 ist mit einer Innenraumverschleißplatte 7 abgedeckt und ebenso der untere zylindrische Innenraummantel 9 mit Verschleißblechen 18, die durch Lösen von Schraubverbindungen austauschbar sind. Diese Verschleißbleche 18 sind in einzelne Sektionen unterteilt, die so konstruiert sind, daß man sie drehen kann, so daß ein z.B. unten verschlissenes Blech um 180° gedreht wird, und der nicht verschlissene Teil zum weiteren Verschleiß zur Verfügung steht. Der untere Innenraummantel 9 ist auf einem unteren Gehäusering 5 aufgebaut, in den der Antrieb 2, 3, 4 ragt. Weiterhin befindet sich am Innenraummantel 9 eine Auswurfklappe 8.

Bei Anordnung der Auswurfklappe 8 in Höhe des Innenraummantels 9 kann diese als Sieb ausgebildet sein, so daß bei Verwendung des Agglomerators zum Zerkleinern der Baustoffe, nämlich Schredderleichtfraktion, Elektronikschrott, Mischkunststoffe, Folien, Fensterprofile aus PVC oder Holz und Holzverbundstoffe, die entsprechende Korngröße unmittelbar den Prozeß verläßt. Das übrig bleibende Material kann dann später durch Öffnen der Auswurfklappe 8 separat ausgeworfen werden.

Weiterhin kann der Innenraummantel 9 sektional oder im ganzen als Sieb ausgebildet werden und dann das Restmaterial an der Auswurfklappe 8 ausgeworfen werden.

Die Statormesser 16 sind innen am Umfang des unteren zylindrischen Innenraummantels 9, dem Außenumfang des Rotormessers 17 gegenüberliegend, angeordnet und über den gesamten Umfang verteilt.

Durch die Verringerung des Durchmessers zwischen dem Mantel 10 und dem Beschickungsteil 23 erreicht man, daß der kreisende Materialstrom im unteren Bereich der Vorrichtung verbleiben muß. Im Beschickungsteil 23 befindet sich seitlich eine Einfüllöffnung 12, durch die Material über eine Zuführschnecke, Rutsche oder Förderband zugeführt werden kann. Die Einfüllrichtung gegenüber der durch den Antrieb 2, 3, 4 vorgegebenen Maschinenachse ist von 0 bis 360° wählbar in Abstufungen der Befestigungsschraubenteilung der Ringe 9, 10, 11. Entsprechend läßt sich auch die Auswurfrichtung variieren. Die Öffnung kann gegebenenfalls mit einer Verschlußkappe versehen sein. Im oberen Dachbereich des Beschickungsteils 23 befindet sich eine Abluftöffnung 14 sowie eine Einstiegluke 15.

Die Chargenbereitstellung wird mittels Verwiegung, vorzugsweise Wiegeband oder Wiegebehälter, ausgeführt. Die Verwiegung der Charge hat folgende Vorteile:
a) Man kann die Auslastung der Vorrichtung über das Chargengewicht steuern;
b) man kann das materialspezifische Betriebsoptimum für die Vorrichtung ermitteln;
c) man hat bei unterschiedlichen Materialschüttgewichten dennoch das gleiche Eingangsgewicht;
d) man kann unterschiedliche Materialien bereits vor dem Agglomerieren auf der Wiegeeinrichtung zusammenstellen und dann zusammen im Agglomerator mischen und daraus eine entsprechend zusammengestellte Fraktion herstellen, z.B. Schredderleichtfraktion mit Folien oder Teppichbodenabfällen mit anderen weniger plastifizierungsfähigen Stoffen.

Man kann zu einem bestimmten Zeitpunkt während der Agglomerationscharge z.B. kurz vor oder während der Plastifizierung weitere Stoffe, wie z.B. Kohlestaub in den Agglomerator einbringen, um diese gewünschte Komponente im Fertigprodukt, z.B. Agglomerat, plastifizierter, pastöser Kuchen oder zerkleinerte Schüttgutmischung zu erhalten. Zum Einbringen von Kohlestaub wird parallel zum Materialstrom außerhalb des Prallreaktors dieser vermischt mit Wasser bereitgestellt. Dafür kann ein Behälter mit Rührwerk vorgesehen sein, um ein Absetzen des Kohlestaubes im Wasser zu verhindern. Dazu ist der Behälter während des Eindüsvorganges hermetisch verschlossen, damit die eingedüste Menge in einem bestimmten Zeitintervall gleichbleibt. Als weitere Möglichkeit könnte man eine zwangsfördernde Pumpe verwenden, die die gebrauchte Menge in einer bestimmten Zeit fördert. Hierfür wird kein Druckbehälter gebraucht, wobei beim Erreichen des Minimumwertes im Vorratsbehälter der Behälter in den entsprechenden Mengenverhältnissen nach dem darauffolgenden Eindüsvorgang wieder befüllt wird. Dazu wird Wasser bis zu einem bestimmten Höhenniveau und dann Karbonkohle in einem bestimmten Gewicht zugesetzt und verrührt. Für den Fall einer praktikablen Kohlestaubschockung kann zur Vermeidung von Verpuffungen ein geerdetes Metallgitter 13 im Inneren des Beschickungsteiles 23 vorgesehen sein.

Über die im Deckel des Beschickungsteils 23 angeordnete Abluftöffnung 14 kann der während des Prozesses anfallende Dampf und gegebenenfalls Staub abgesaugt werden. Dabei kann es von Vorteil sein, daß man in einem etwas tiefer liegenden Bereich eine weitere Öffnung, gegebenenfalls Klappe vorsieht, so daß bei Notwendigkeit ein großer Luftstrom durch die Vorrichtung durchgesetzt werden kann, welcher den anfallenden Dampf oder Staub rasch aus dem Agglomeratorinneren bringen kann. Es ergibt sich dabei durch die Gesamtkonstruktion des Agglomerators ein hohes Maß an Betriebssicherheit, da aus dem Gerätinneren keine Materialien nach außen gelangen können und so weder Personal noch Anlagenteile gefährdet werden.

Der Agglomerator wird über einen Bildschirm mittels eines PC-Programms gesteuert. Zur Prozeßsteuerung dienen folgende Eingangskenngrößen:
1) Ein oder mehrere Temperatursensoren am Maschinenkörper,
2) ein oder mehrere Feuchtsensoren im Maschineninneren, wobei ein solcher Feuchtesensor 20 in Figur 1 dargestellt ist,
3) ein oder mehrere Vibrationsgeber am Maschinenäußeren,
4) der Motorstrom und
5) die während der Charge durch den Motorstrom ermittelte Energie in kWh, welche während der Charge aufgewendet wurde.

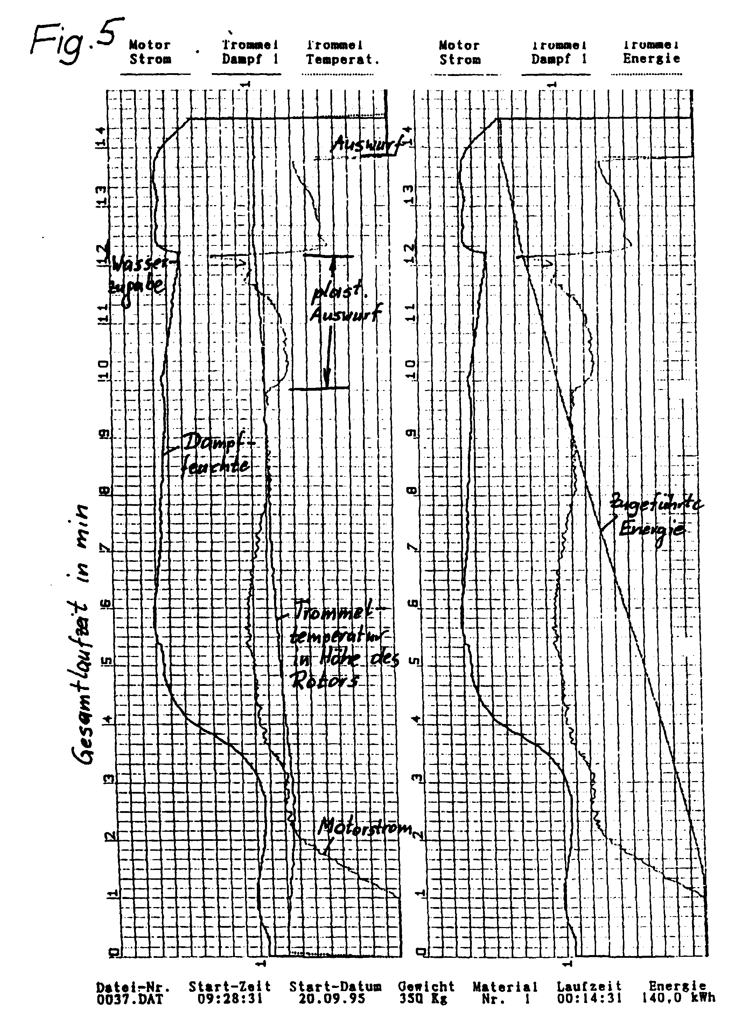

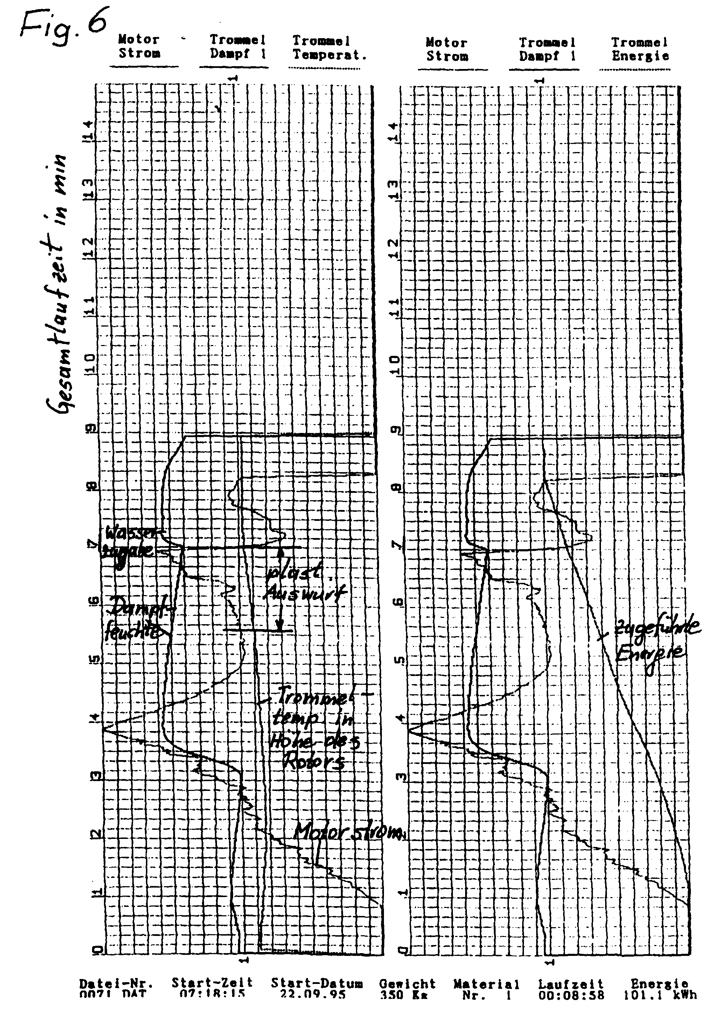

Diese Werte werden während der Charge auf dem Bildschirm durch eine Grafik in Form von Kurven fortlaufend dargestellt sowie in Zahlen angezeigt. In den Figuren 5 und 6 sind solche Diagramme dargestellt, wobei die Figur 5 ein Material mit höherer Dampffeuchte veranschaulicht, während es sich bei der Darstellung in Figur 6 um ein Material mit geringerer Gesamtfeuchte handelt. In den Diagrammen ist auch jeweils der Bereich gezeigt, wo das Material in plastifiziertem Zustand ausgeworfen werden kann, sowie der Bereich, wo ein Auswurf im granulierten Zustand erfolgt. Alle diese Werte und Kurven werden gespeichert und können Charge für Charge auf Papier ausgedruckt werden. Dadurch hat man die Möglichkeit, material-, gewichts- und feuchtspezifische Trennlinien und Daten zu dokumentieren und nachvollziehbare, verfahrenstechnische und automationstechnische Rückschlüsse zu ziehen. Das Automationsprogramm ist in Schritte unterteilt. Bei jedem Schritt müssen bestimmte Voraussetzungen erfüllt sein, damit der nächste eingeleitet werden kann. Hat man aufgrund der durch die Kurvendarstellung gewonnenen Erkenntnisse alle Schritte parametriert, so gibt man diesem Schrittautomatikprogramm eine Nummer. Die Maschine arbeitet dann automatisch. Man kann nun für die verschiedensten Materialien entsprechende Programme erstellen und dann per Nummernzuweisung jeweils die materialspezifische Automatik in Betrieb setzen.

Nachdem die Funktion der Maschine nicht schneidend, sondern als Prallreaktor wirkt und damit ein Aufheizen der Stoffe durch die dabei geleistete Arbeit gegeben ist, werden die Kunststoffe plastifiziert. Es bildet sich im Randbereich des Rotationsmessers 17 ein Kuchen 40, den man durch Verwendung von Schockwasser erstarren lassen kann und dann das Granulat entsteht. Das Schockwasserzuführrohr 22 ist im oberen Bereich des zylindrischen Innenraummantels 10 zugeführt und gegen die Mitte des Rotormessers 17 gerichtet. Dadurch wird das Schockmittel durch die Zentrifugalkraft am wirksamsten und schnellsten an seinen Reaktionsort (plast. Masse) gebracht, womit ein geringerer Wassereinsatz und geringerer Verdampfungsenergieaufwand verbunden ist.

Durch das Automationsprogramm ist es möglich, bereits im beginnenden Plastifizierungsstadium das Material gezielt aus dem Agglomerator auszuwerfen. Man hat dadurch den Vorteil, daß kein Schockwasser verwendet werden muß und sich somit der Energieaufwand als auch der Zeitaufwand reduziert. Dadurch steigt der Maschinendurchsatz sowie die Standzeit der Verschleißteile. Das Material eignet sich dabei unmittelbar zur Weiterverarbeitung, d. h. kein erneutes Aufschmelzen durch z.B. Extruder.

Nachdem man zum Zeitpunkt innerhalb der Plastifikation gezielt und reproduzierbar auswerfen kann, ergibt sich ein Material, das hinsichtlich seiner klassischen und teigähnlichen Konsistenz mit Extruderchargen vergleichbar ist. Damit sind folgende Verfahrensschritte möglich.
1) Ein nachfolgender Schnecken- oder Kolbentransport und Druckaufbau für eine Schmelzfiltration,
2) die Masse kann per Schnecken- oder Kolbenvorschub in Formen zur Formteilherstellung eingebracht werden,
3) die Masse kann entsprechend portioniert in Preßformen zur Herstellung von Preßteilen eingebracht werden;
4) die Masse wird über einen Kalander zu dickwandigen Folien verarbeitet. Man kann sich somit eine erneute Aufschmelzung durch z.B. einen Extruder ersparen, wobei erhebliche Einsparungen an Betriebskosten, wie Personal, Energie, Investitionen und Verschleiß gegeben sind.

Beim Verarbeiten von Schredderleichtfraktionen, d.h. Zusammensetzungen des Materials, wie sie bei der Verarbeitung von Kfz-Schrott anfallen, kann dies ohne Vorbehandlung erfolgen. Der Agglomerator homogenisiert die Gesamtcharge und separiert hierbei Metallteile vom übrigen Gemisch, so daß man diese in einem weiteren verfahrenstechnischen Schritt durch z.B. Magnete, Wirbelstromabscheider, verschiedene Windsichtungsverfahren sowie Siebung als auch andere zur Separation taugliche Verfahren von der Gesamtfraktion trennen kann. Dadurch erhält man Metallbestandteile als Rohstoff zurück und hat die restliche Fraktion zur weiteren Verarbeitung z.B. als Energieträger in Zementwerken oder Heizkraftwerken sowie als Reduktionsmittel bei der Stahlherstellung zur Verfügung. Der Prozeß wird im Agglomerator verkürzt, indem man den Verfahrensschritt Plastifizieren, Abschockung und erneutes Zerkleinern wegläßt und die Charge auswirft, oder den Verfahrensschritt "Plastifizieren" einleitet und die plastische Masse auswirft, so daß die Masse vom Volumen her kostengünstig reduziert wird. Diese Masse kann dann deponiert, thermisch verwertet, zu Formteilen weiterverarbeitet oder zu anderen Wirtschaftsgütern weiterverarbeitet werden. Der weitere mögliche Verfahrensschritt ist das Abschocken, anschließendes Ausdampfen und dann das Granulat bzw. Agglomerat auszuwerfen.

Nach dem Agglomerations- bzw. Homogenisierungsprozeß der Kfz-Schredderleichtfraktion besteht die Möglichkeit, dieses Material abzusieben und die Feinfraktion mit einem starken Magneten zu separieren. Es ist festzustellen, daß die Feinfraktion aus einem sehr hohen Anteil magnetisierbarem Material besteht. Es ist davon auszugehen, daß bei dem so separierten Material außer Kunststoffen und ferromagnetischen Bestandteilen weitgehend keine weiteren Materialien enthalten sind, so daß diese gewonnene Fraktion mit der erwähnten Reinheit problemlose Weiterverwertungseigenschaften hat, z.B. bei der Stahlerzeugung.

Bei der Verarbeitung derartiger Schredderleichtfraktionen kann das Material mit Kunststoffen auf Wiegeband in beliebigen Gewichtsanteilen zusammengestellt und in die Vorrichtung eingefahren werden. Beim Einsatz von Schockwasser entsteht dann Granulat und beim Auswurf im plastifizierten Zustand kann ein Auswurf nach der vorgegebenen Kurvenform oder Temperatur und Verpressen zu Formteilen erfolgen. Auch kann das Material nach dem Agglomerations- bzw. Homogenisierungsprozeß in ein Teergemisch für Boden- oder Straßenbelag eingebracht werden. Bei dieser Variante ist es ggf. nicht erforderlich, daß aus der Fraktion Metall oder irgendwelche Bestandteile separiert werden.

Mit der Vorrichtung läßt sich auch Elektronikschrott be- und verarbeiten. Die Einzelbestandteile lassen sich hierbei aus dem Verbund heraus separieren und somit in einem Schüttgut aus den einzelnen Komponenten, wie z.B. GFK, Zinn, Kupfer und andere Bestandteile durch Windsichtung, Plansichtung, Wirbelstromabscheider separieren. Diese Einzelbestandteile können dann weiteren Verwendungszwecken zugeführt werden. Gegebenenfalls läßt sich ein solches Gemisch auch in ein Teergemisch zur Verwendung bei Straßenbauarbeiten einbringen.

Bedingt durch die Steuerung der Maschine läßt sich diese auch zum Zerkleinern und Vortrocknen durch Ausdampfen für verschiedene Materialien, z.B. Mischkunststoffe oder Folien verwenden. Dabei werden die Chargen jedoch nicht zur Plastifizierung gebracht, sondern bei einem bestimmten nachvollziehbaren und wiederholbaren Zeitpunkt ausgeworfen und dann z.B. einer Pelletiermaschine zugeführt. Diese kann dann wesentlich effektiver arbeiten und ein Pellet produzieren mit gleichbleibenden, sehr geringen Restfeuchten.

Als weiterer Anwendungsfall ist das Recycling von Fensterprofilen aus PVC mit Gummidichtungen oder Holzfenstern mit Gummiprofilen denkbar. Dabei können auch Metallbestandteile vorhanden sein, wobei die Gummidichtungsbestandteile sowie die Metallteile von dem übrigen Material getrennt in der Schüttung vorhanden sind.

Ein weiterer Anwendungsfall ist das Be- und Verarbeiten von Holzverbundwerkstoffen, z. B. Spanplatten mit Kunststoffbeschichtung, wodurch das Holz von dem Kunststoff getrennt wird.

An Stelle des Antriebsmotors 2 kann ein Dieselmotor-Direktantrieb vorgesehen sein, wobei der Dieselmotor eine entsprechende Analogausgangsinformation für die Steuerung aufweist, die die Stromaufnahme beim Elektromotor ersetzt. Des weiteren läßt sich die Verlustwärmeenergie des Dieselmotors über Wärmetauscher zur Vortrocknung des Inputmaterials nutzen. Dadurch ist auch die Voraussetzung in Deutschland geschaffen, steuerfreien Kraftstoff für den Dieselmotor zu benutzen (Heizöl).

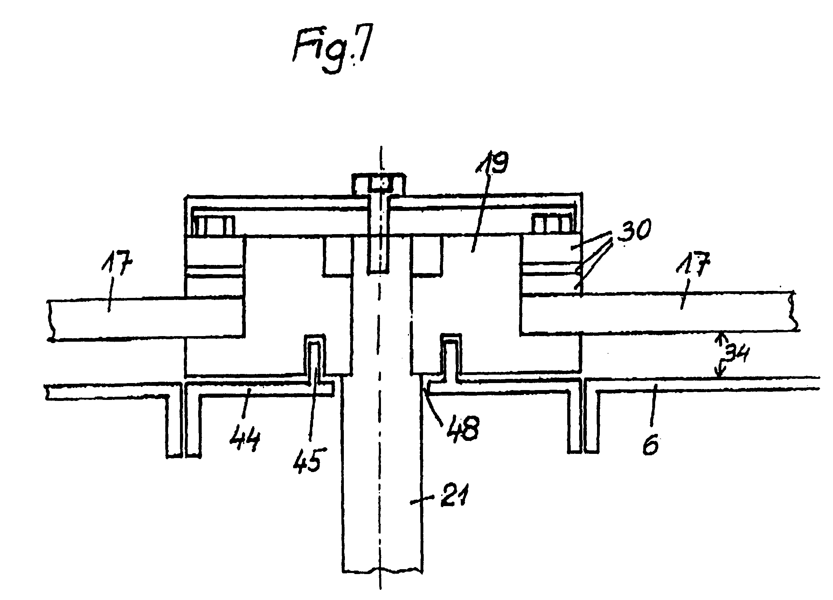

Wie in Fig. 7 dargestellt, lassen sich zur Abstandsveränderung zwischen Rotor 17 und Agglomeratorgrundplatte 6 verschiedene Möglichkeiten anwenden. Die Grundplatte 6 reicht im Durchmesser bis zum Außendurchmesser der Rotoraufnahme 19 und schließt an einen Innenring 44 an, der mit einem weiteren Ring 45 in die Rotoraufnahme 19 eingreift. Dieser Ring 45 ist als Labyrinthdichtung zu werten, wobei auch mehrere solcher Abdichtungen an der Wellendurchtrittsöffnung 48 angeordnet sein können. Es können ein oder mehrere Ringe als Labyrinthabdichtung zur Abdichtung am Rotorwellendurchgangsloch vorgesehen sein. Durch axiales Verschieben der Grundplatte 6 läßt sich somit der Abstand 34 für die Rotorhöhe auch während des Betriebes durchführen. Es besteht auch die Möglichkeit, die Rotorwelle auf und ab zu bewegen. Damit läßt sich auch die Maschine während der Charge besser auf das Verfahren und das Material einstellen und weiterhin kann sich die Maschine beim Auswurf des Materials besser entleeren.

Es läßt sich auch die Welle 21 insbesondere während des Betriebes heben und absenken.

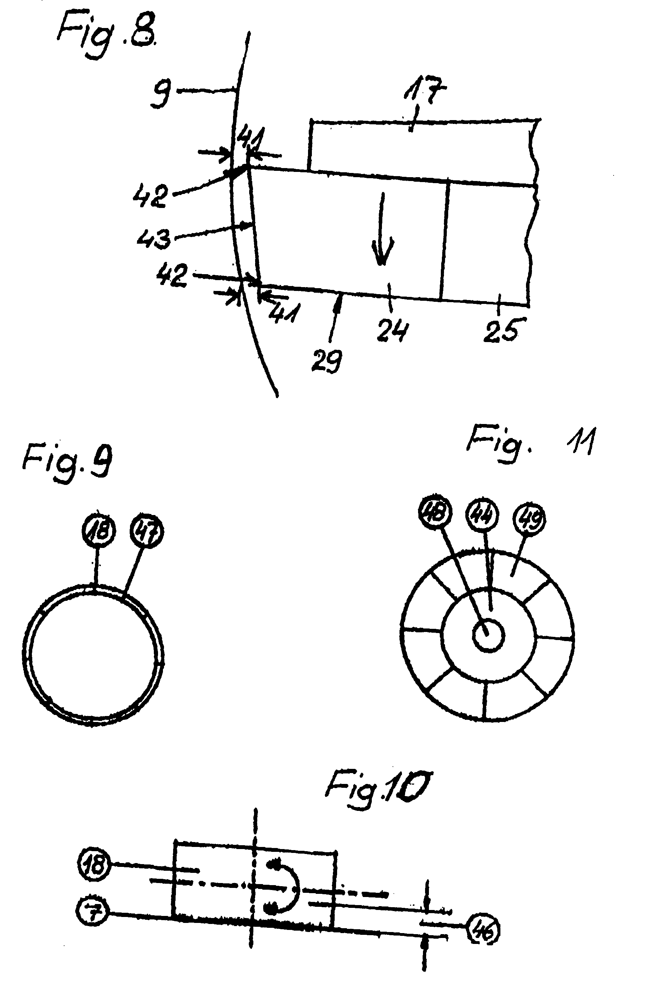

Dazu ist es auch vorteilhaft, wie in Fig. 8 dargestellt, das Rotoraußenmesser 24 im Bereich seiner Außenkante 43 derart zu verändern, daß an den Eckpunkten 42 jeweils der gleiche Abstand 41 zum Innenraummantel 9 gegeben ist. Auch ist es von Vorteil, die Statormesser 16 in Form und Größe zu verändern oder diese ganz wegzulassen und damit eine Standzeiterhöhung der Messer und geringere Verschleißkosten zu erzielen.

Zur Anpassung an die verschiedenen Gegebenheiten kann es auch sinnvoll sein, die Verschleißinnenmäntel 18 (in Segmenten geteilt) des Mantels 9 an einem Drehpunkt lagernd und am anderen Ende nach innen verstellbar zu gestalten (hydraulisch, motorisch u.dgl.), um so verschiedene Abstandsphasen zwischen Rotor 17 und Außenmantel 9 während des Betriebes zu erhalten.

Die Fig. 9 zeigt die Aufteilung des Verschleißblechmantels 18 in einzelne Verschleißsegmente 47, wobei wenigstens drei solcher Elemente zur Bildung des Mantels vorgesehen sein sollen, um die Montage und Demontage besser durchführen zu können.

Wie Fig. 10 zeigt, sind die Bleche 47 so konstruiert, daß man sie um 180° drehen kann und somit das Blech doppelt ausnutzen kann, mit dem Vorteil geringerer Verschleißkosten und schnelleres Wechseln der Bleche. Mit dem Bezugszeichen 46 ist der ungefähre Verschleißbereich gekennzeichnet.

Die Fig. 11 zeigt im wesentlichen den Agglomeratorboden mit einer Wellendurchtrittsöffnung 48, den sich anschließenden Innenring 44 und die Verschleißbleche 7, die in einzelne Verschleißblechsegmente 49 unterteilt sind. Diese Segmente 49 befinden sich in der Nähe der Behälterzylinderinnenwand 9 und sind von unten durch die Bodenplatte verschraubt, wobei in den Verschleißblechsegmenten 49 Gewinde vorgesehen sind. Damit ist ein einfaches und schnelles Wechseln der Verschleißbleche 49 gewährleistet. Der Materialaufwand und die Kosten sind gering, da nur im Verschleißbereich gewechselt wird. Hierbei ist die Anzahl der Segmente 49 unwesentlich, jedoch sind mindestens drei Segmente wegen der Demontierbarkeit und Montierbarkeit erforderlich.

## Patentansprüche

1. Verfahren zum Verarbeiten von Bauteilen aus Mischkunststoffen und damit vermischten anderen Baustoffen, wie Metallteilen, Glas, Gummi, Holz oder Faserstoffen, wobei die Bauteile durch eine Prallbeanspruchung zerkleinert und die Kunststoff-, Metall-, Glas- und Gummiteile voneinander getrennt werden, dadurch gekennzeichnet, daß die Verarbeitung der Kunststoffe zu Granulat oder als Masse im plastischen Zustand in einem Agglomerator durchgeführt wird, wobei die verschiedenen Materialien vor dem Agglomerieren auf einer Wiegeeinrichtung zusammengestellt und im Agglomerator gemischt werden und daß der Agglomerator über ein PC-Programm gesteuert wird, wobei die Parameter, wie Motorstrom, Temperatur und Dampffeuchte, reproduzierbar erfaßt werden.

2. Verfahren nach Anspruch 1, dadurch gekennzeichnet, daß der Agglomerationscharge kurz vor oder während der Plastifizierung weitere Stoffe, z. B. Kohlestaub, zugesetzt werden.

3. Verfahren nach einem der Ansprüche 1 und 2, dadurch gekennzeichnet, daß das plastifizierte Material durch einen Schnecken- oder Kolbentransport in Formen eingebracht oder verpreßt wird oder über einen Kalander zu Folien verarbeitet wird.

4. Verfahren nach einem der Ansprüche 1 bis 3, dadurch gekennzeichnet, daß dem plastifizierten Material Schockwasser zugeführt und die erstarrte Masse im Agglomerator zu Granulat zerkleinert wird.

5. Verfahren nach Anspruch 4, dadurch gekennzeichnet, daß das Schockwasser auf die Mitte des Rotors des Agglomerators zugeführt wird.

6. Verfahren nach einem der Ansprüche 1 bis 5, dadurch gekennzeichnet, daß das Granulat abgesiebt und die Feinfraktion mit einem starken Magneten separiert wird.

7. Verfahren nach einem der Ansprüche 1 bis 6, dadurch gekennzeichnet, daß die im Agglomerator zerkleinerten Bauteile in die Einzelkomponenten durch Windsichtung, Plansichtung, Wirbelstromabscheider und dgl. separiert werden.

8. Verfahren nach einem der Ansprüche 1 bis 7, dadurch gekennzeichnet, daß die im Altpapier enthaltenen Spuckstoffe, im wesentlichen bestehend aus folienartigen Kunststoffen, textilen Bestandteilen und Metallen bei der Altpapierverwertung agglomeriert, plastifiziert und separiert werden.

9. Verfahren nach Anspruch 8, dadurch gekennzeichnet, daß das Material vor der Verarbeitung im Agglomerator vorentwässert wird.

10. Vorrichtung zum Durchführen des Verfahrens nach den Ansprüchen 1 bis 9,mit einem zylindrischen Mantel (9, 10) mit aufgesetztem Beschickungsteil (23), in dem ein Rotormesser (17) mit Prallelementen (24, 25, 26) mit dem Umfangsrand einem Statormesser (16) gegenüberliegend angeordnet ist, das von einem Antriebsmotor mit Getriebe angetrieben ist, dadurch gekennzeichnet, daß zum Steuern der Anlage beim Verarbeiten der verschiedensten Materialien die Prozessparameter, wie Temperatur, Dampffeuchte und Motorstrom, erfaßbar und reproduzierbar sind, wobei das Chargengewicht in einer Wiegeeinrichtung ermittelbar und als weiterer Prozessparameter berücksichtigt ist und daß das Rotormesser (17) an der Rotoraufnahme (19) höhenverstellbar, z.B. zwischen auswechselbaren Distanzringen (30), angeordnet ist.

11. Vorrichtung nach Anspruch 10, dadurch gekennzeichnet, daß der Antriebsmotor (2) waagerecht angeordnet ist und ein hohes Kippmoment, etwa 2,8 bis 3-fach aufweist, auf dem das Rotormesser an einer Rotoraufnahme (19) verdrehsicher befestigt ist.

12. Vorrichtung nach Anspruch 10 und 11, dadurch gekennzeichnet, daß im Abstand zum Rotormesser (17) weitere Rotormesser an der Rotoraufnahme (19) angeordnet sind.

13. Vorrichtung nach Anspruch 10 bis 12, dadurch gekennzeichnet, daß das Rotormesser (17) in Rotoraußenmesser (24), Rotorinnenmesser (25) und Rotorverschleißschutzteile (26) unterteilt ist.

14. Vorrichtung nach einem der Ansprüche 10 bis 13, dadurch gekennzeichnet, daß der Rotor (17) an beiden Seiten mit Messern (24, 25, 26) versehen ist und nach beiden Seiten drehbar ist.

15. Vorrichtung nach Anspruch 10 bis 14, dadurch gekennzeichnet, daß das Rotormesser (17) eine stumpfe Prallfläche (29) aufweist.

16. Vorrichtung nach Anspruch 15, dadurch gekennzeichnet, daß die Prallfläche (29) einen Anstellwinkel zur Drehrichtung (36) aufweist.

17. Vorrichtung nach Anspruch 10 bis 16, dadurch gekennzeichnet, daß der Innenraum (31) mit Verschleißblechen (18, 7) versehen ist, die doppelt verwendbar sind durch eine 180° Drehung der Einbaulage.

18. Vorrichtung nach Anspruch 10 bis 17, dadurch gekennzeichnet, daß in den Innenraum (31) des Innenraummantels (9, 10) ein Schockwasserzuführrohr (22) mündet, das gegen die Mitte des Rotormessers (17) gerichtet ist.

19. Vorrichtung nach einem der Ansprüche 10 bis 18, dadurch gekennzeichnet, daß als Antriebsmotor (2) ein Dieselmotor vorgesehen ist.

20. Vorrichtung nach Anspruch 19, dadurch gekennzeichnet, daß die Verlustwärme des Motors (2) über Wärmetauscher zur Vortrocknung des Materials nutzbar ist.

21. Vorrichtung nach einem der Ansprüche 10 bis 20, dadurch gekennzeichnet, daß die Grundplatte (6) an einem Innenring (44) gehaltert im Abstand (34) zum Rotor (17) höhenverstellbar ist.

22. Vorrichtung nach einem der Ansprüche 10 bis 21, dadurch gekennzeichnet, daß der Abstand (41) der Eck- punkte (42) an der Außenkante (43) des Rotoraußenmessers (24) zum zylindrischen Innenraummantel (9) gleich ist.

23. Verwendung eines Verfahrens und einer Vorrichtung nach den Ansprüchen 1 bis 22 zum Recycling von Schredderleichtfraktion, bestehend aus verschrotteten Kraftfahrzeugen mit Kunststoff-, Metall, Textil- und Gummibestandteilen.

24. Verwendung eines Verfahrens und einer Vorrichtung nach den Ansprüchen 1 bis 22 zum Recycling von Elektronikschrott, bestehend aus thermoplastischen und duroplastischen Kunststoffen, sowie Zinn, Kupfer und weiterer Bestandteile.

25. Verwendung eines Verfahrens und einer Vorrichtung nach den Ansprüchen 1 bis 22 zum Verarbeiten von Mischkunststoffen oder Folien.

26. Verwendung eines Verfahrens und einer Vorrichtung nach den Ansprüchen 1 bis 22 zum Recycling von Fensterprofilen aus PVC oder Holz mit Gummidichtungen und Metallbeschlägen.

27. Verwendung eines Verfahrens und einer Vorrichtung nach den Ansprüchen 1 bis 22, zum Recycling von Holzverbundstoffen, z.B. Spanplatten mit Kunststoffbeschichtung.

## Claims

1. Process for the treating of prefabricated parts made of mixed synthetic materials and building material mixed with it, such as metal parts, glass, rubber, wood or fibrous material, in the course of which the prefabricated parts will be comminuted by impact stress and parts of synthetic material, metal, glass and rubber will be separated, characterized by the fact, that the processing of synthetic material into granule or as mass in plastic state is carried out in an agglomerator, in the course of which the different materials are composed on a weighing device before the agglomeration and mixed in the agglomerator, and that the agglomerator is controlled by a PC-program in the course of which parameters such as motor current, temperature and steam dampness are reproducibly registered.

2. Process according to claim 1, characterized by the fact that shortly before or during the melting of further materials, e.g. pulverized coal is added to the charge for agglomeration.

3. Process according to one claim out of claims 1 and 2, characterized by the fact that the plastified material is put or pressed into forms via a worm- or piston-transport or is manufactured into foils via a calender.

4. Process according to one claim out of claims 1 - 3, characterized by the fact that the plastified material is fed with shock water and the solidified mass is comminuted into granule in the agglomerator.

5. Process according to claim 4, characterized by the fact that the shock water is fed onto the middle of the agglomerator's rotor.

6. Process according to one claim out of claims 1 to 5, characterized by the fact that the granule is screened and the fine fraction is separated by using a strong magnet.

7. Process according to one claim out of claims 1 to 6, characterized by the fact that the prefabricated parts comminuted in the agglomerator are being separated into single components via air separation, plansifting, eddy current or whirling cutter and suchlike.

8. Process according to one claim out of claims 1 to 7, characterized by the fact that rejects contained in waste paper, basically consisting of foillike synthetic material, textile components and metals are being agglomerated, plastified and separated during waste paper utilization.

9. Process according to claim 8, characterized by the fact that material will be preliminary dehydrated before the processing in the agglomerator.

10. Device for the implementation of the process according to claims 1 to 9, with a cylindrical casing (9, 10) with a fitted charging piece (23), in which a rotor knife (17) with impact elements (24, 25, 26) with a circumferential border, is arranged opposite to a stator knife (16), which is driven by a driving motor with gearing, characterized by the fact that for controlling the installation during the processing of the most different materials, the process parameters such as temperature, steam dampness and motor current can be recorded and reproduced, in the course of which the charge weight can be determined on a weighing device and is also taken into account as a further process parameter, and that the rotor knife (17) on the rotor receiver (19) is arranged adjustably in height, e.g. between exchangeable distance rings (30).

11. Device according to claim 10, characterized by the fact that the driving motor (2) is arranged horizontally and shows a high tilting moment, about 2.8 to 3 times, on which the rotor knife is fixed safely against torsion to a rotor bearing (19).

12. Device according to claims 10 and 11, characterized by the fact that in the distance to rotor knife (17) other rotor knives are fixed to the rotor bearing (19).

13. Device according to claims 10 to 12, characterized by the fact that the rotor knife (17) is divided into external rotor knife (24), internal rotor knife (25) and wearing protection parts for the rotor (26).

14. Device according to one claim out of claims 10 to 13, characterized by the fact that the rotor (17) is on both sides provided with knives (24, 25, 26) and rotatable to both sides.

15. Device according to claims 10 to 14, characterized by the fact that rotor knife (17) shows a blunt deflector (29).

16. Device according to claim 15, characterized by the fact that the deflector (29) shows an angle of attack to the sense of rotation (36).

17. Device according to claims 10 to 16, characterized by the fact that the interior space (31) is supplied with wear sheets (18, 7), which are to be used dually by rotating the fitting position 180°.

18. Device according to claim 10 to 17, characterized by the fact that a feeding pipe (22) leads into the interior room (31) of the interior room shell (9, 10), which is pointed towards the middle of the rotor knife (17).

19. Device according to one out of claims 10 to 18, characterized by the fact that it is planned to use a diesel engine as driving motor (2).

20. Device according to claim 19, characterized by the fact that dissipated heat of the motors (2) is useable via heat exchanger for pre-drying of the material.

21. Device according to one out of claims 10 to 20, characterized by the fact that the basic plate (6) fixed to an interior ring (44) in a distance (34) to the rotor (17) is adjustable in height.

22. Device according to one out of claims 10 to 21, characterized by the fact that the distance (41) of the angle points (42) on the outer edge (43) of the external rotor knife (24) to the cylindrical interior room shell (9) is identical.

23. Employment of a process and a device according to claims 1 to 22 for the recycling of shredder light fraction, consisting of scraped motor vehicles with parts of synthetic material, metal, textiles and rubber.

24. Employment of a process and a device according to claims 1 to 22 for the recycling of electronic scrap, consisting of thermoplastic and duroplastic synthetic materials as well as tin, copper and other components.

25. Employment of a process and a device according to claims 1 to 22 for the treating of mixed synthetic materials or foils.

26. Employment of a process and a device according to claims 1 to 22 for the recycling of casement sections made of PVC or wood with rubber joints and metal fittings.

27. Employment of a process and a device according to claims 1 to 22 for the recycling of wooden composite materials, e.g. chip boards with plastic-laminate.

## Revendications

1. Procédé pour travailler des éléments de construction composés de matières synthétiques mixtes et d'autres matériaux de construction mélangés avec ceux-ci, comme pièces de métal, verre, caoutchouc, bois ou matières fibreuses, à quoi les éléments de construction seront fractionner par un effort d'impact et les pièces de matières synthétiques, de métal, de verre et de caoutchouc seront séparés l'un de l'autre, caractérisée de manière que le traitement des matières synthétiques en granulé ou comme masse en état de plastique a lieu dans une installation d'agglomération - un "agglomérateur" - à quoi les matières différentes seront assorties sur un dispositif de pesage avant de les agglomérer et mélangées dans l'agglomérateur et que l'agglomérateur est commandé par un programme de PC, à quoi les paramètres comme le courant de moteur, température et l'humidité de vapeur seront saisi de manière reproductible.

2. Procédé selon revendication 1, caractérisé de manière que juste avant ou pendant la plastification d'autres matières seront ajoutées au charge d'agglomération, p. ex. poussière de charbon.

3. Procédé selon une des revendications 1 ou 2, caractérisé de manière que le matériel plastifié est mis ou comprimé dans des formes par un vis sans fin transporteuse ou un transport à piston ou il est travaillé aux feuilles par une calandre.

4. Procédé selon une des revendications 1 à 3, caractérisé de manière que de l'eau à choc est amenée au matériel plastifié et la masse solidifiée est fractionnée en granulé dans l'agglomérateur.

5. Procédé selon revendication 4, caractérisé de manière que l'eau à choc est amenée au centre du rotor de l'agglomérateur.

6. Procédé selon une des revendications 1 à 5, caractérisé de manière que le granulé est criblé et la fraction fine est séparée avec un aimant fort.

7. Procédé selon une des revendications 1 à 6, caractérisé de manière que les éléments de construction fractionnés dans l'agglomérateur sont séparés par élutriation, blutoir horizontal (plansichter), coupeur de courant parasite et semblable.

8. Procédé selon une des revendications 1 à 7, caractérisé de manière que les déchets compris dans les vieux papiers, essentiellement composés des matières synthétiques feuilleuses, des composants textiles et des métaux sont agglomérés, plastifiés et séparés lors de l'utilisation des vieux papiers.

9. Procédé selon revendication 8, caractérisé de manière que le matériel est asséché préalablement avant d'être traiter dans l'agglomérateur.

10. Dispositif pour la réalisation du procédé selon revendications 1 à 9, avec une chape cylindrique (9, 10) avec une partie de chargement (23) montée dessus, et dans laquelle est arrangé un couteau à rotor (17) avec des éléments d'impact (24, 25, 26) et avec le bord périphérique en face d'un couteau à stator (16), qui est propulsé par un moteur de commande avec rouage, caractérisé de manière que pour manoeuvrer l'installation en travaillant les matériaux les plus différents, les paramètres de procédé comme température, humidité de vapeur et courant de moteur sont saisissables et reproductibles, à quoi le poids de la charge est déterminable dans un dispositif de pesage et ainsi est considéré comme autre paramètre de procédé et que le couteau à rotor (17) est arrangé de manière ajustable en hauteur, p. ex. entre des bagues d'écartement (30) interchangeables.

11. Dispositif selon revendication 10, caractérisé de manière que le moteur de commande (2) est arrangé horizontalement et montre un couple maximum de moteur haut, environnement 2,8 à 3 fois, sur lequel le couteau à rotor est fixé résistant à la torsion au palier de rotor (19).

12. Dispositif selon revendication 10 et 11, caractérisé de manière qu'à la distance au couteau à rotor (17) d'autres couteaux à rotor sont arrangés au palier de rotor (19).

13. Dispositif selon revendication 10 à 12, caractérisé de manière que le couteau à rotor (17) est subdivisé en couteau à rotor extérieur (24), couteau à rotor intérieur (25) et pièces de protection d'usure (26).

14. Dispositif selon une des revendication 10 à 13, caractérisé de manière que le rotor (17) est muni des couteaux (24, 25, 26) aux deux côtés et il est rotatif vers deux côtés.

15. Dispositif selon revendication 10 à 14, caractérisé de manière que le couteau à rotor (17) montre une surface d'impact émoussée (29).

16. Dispositif selon revendication 15, caractérisé de manière que la surface d'impact (29) montre un angle d'incidence vers la direction de mouvement rotatoire (36).

17. Dispositif selon revendication 10 à 16, caractérisé de manière que l'intérieur (31) est muni des plaques d'usure (18, 7), qui sont utilisable à double sens par une rotation à 180° de la position de montage.

18. Dispositif selon revendication 10 à 17, caractérisé de manière qu'un tube d'alimentation de l'eau à choc se déverse dans l'intérieur (31) de la chape d'intérieur (9, 10) et ce tube est dirigé vers le centre du couteau à rotor (17).

19. Dispositif selon une des revendications 10 à 18, caractérisé de manière qu'un moteur Diesel est prévu comme moteur de commande (2).

20. Dispositif selon revendication 19, caractérisé de manière que la chaleur dissipée du moteur (2) est utilisable au moyen d'échangeur de chaleur pour une préséchage du matériel.

21. Dispositif selon une des revendications 10 à 20, caractérisé de manière que la plaque de base (6), serrée a une bague intérieur (44) à distance (34) au rotor (17), est ajustable en hauteur.

22. Dispositif selon une des revendications 10 à 21, caractérisé de manière que la distance (41) des points cornier (42) à la face extérieur (43) du couteau à rotor extérieur (24) vers la chape d'intérieur cylindrique (9) est égale.

23. Emploi d'un procédé et d'un dispositif selon revendications 1 à 22 pour le recyclage de "Schredder" (préparation des ferrailles) -fraction légère, composé d'automobiles ferraillés contenant des éléments de matières synthétiques, de métal, de textile et de caoutchouc.

24. Emploi d'un procédé et d'un dispositif selon revendications 1 à 22 pour le recyclage de rebut électronique, composé de matières synthétiques thermoplastiques et thermodurcisseurs ainsi que étain, cuivre et d'autres éléments.

25. Emploi d'un procédé et d'un dispositif selon revendications 1 à 22 pour le traitement de matières synthétiques mélangées ou feuilles.

26. Emploi d'un procédé et d'un dispositif selon revendications 1 à 22 pour le recyclage de profils de fenêtres en CPV ou bois avec garnitures en caoutchouc et en métal.

27. Emploi d'un procédé et d'un dispositif selon revendications 1 à 22 pour le recyclage de matières composites en bois, p. ex. panneaux de particules avec enduits de matière synthétique.
